# EUROPÄISCHE PATENTANMELDUNG

(11) **EP 3 054 167 A1**
(43) Veröffentlichungstag der Anmeldung: **10.08.2016**
(21) Anmeldenummer: 16000151.7
(22) Anmeldetag: 22.01.2016
(51) Int. Cl.: F04D 29/42, F04D 1/00, F04D 29/22, F04D 29/44

(54) **TURBOPUMPE FÜR EIN RAKETENTRIEBWERK MIT EINER RADIALSTUFE**

(30) Priorität: 04.02.2015 DE 102015001271
(71) Anmelder: Airbus DS GmbH, 82024 Taufkirchen (DE)
(72) Erfinder: Mäding, Chris Udo, D-85716 Unterschleißheim (DE)
(74) Vertreter: Schicker, Silvia

(57) **Zusammenfassung**

Die Erfindung betrifft eine Turbopumpe für ein Raketentriebwerk mit einer Radialpumpe (30), die ein Laufrad (31) mit Schaufeln (32) in einem im Wesentlichen rotationssymmetrisch ausgebildeten Zentralkörper (33) umfasst. Der Zentralkörper (33) der Turbopumpe für ein Raketentriebwerk umfasst zwei getrennte Abströmbereiche (37, 38) für eine Treibstoffkomponente (A) des Raketentriebwerks. Ein erster Teil der Treibstoffkomponente (A) ist durch einen ersten der Abströmbereiche (37) in eine Raketenbrennkammer und ein zweiter Teil der Treibstoffkomponente (A) durch einen zweiten der Abströmbereiche (38) in einen Gaserzeuger (6) ausförderbar. Der erste Abströmbereich (37) und der zweite Abströmbereich (38) weisen unterschiedliche geometrische Abmessungen auf, wodurch die Treibstoffkomponente (A) in dem ersten Abströmbereich (37) mit einem ersten Treibstoffdurchsatz und einem ersten Austrittsdruck bereitstellbar ist, die sich von einem zweiten Treibstoffdurchsatz und einem zweiten Austrittsdruck des zweiten Abströmbereichs (38) unterscheiden.

## Beschreibung

Die Erfindung betrifft eine Turbopumpe für ein Raketentriebwerk mit einer Radialpumpe, die ein Laufrad mit Schaufeln in einem im Wesentlichen rotationssymmetrisch ausgebildeten Zentralkörper umfasst.

Radialpumpen dienen der Förderung und Druckerhöhung eines Betriebsmediums zur Gewährleistung der Betriebszustände in einer Raketenbrennkammer des Raketentriebwerks. Bei Raketentriebwerken, die nach dem sog. Hauptstromverfahren (englisch: Stage Combustion oder Closed Cycle) arbeiten, wird ein Teil einer von zwei Treibstoffkomponenten (ein Brennstoff oder ein Oxydator) in eine Vorkammer eingebracht, um eine Verbrennung der Treibstoffkomponente bei magerer oder fetter Mischung bei moderater Heizgastemperatur zu gewährleisten. Die Vorkammer wird auch als Gasgenerator oder Preburner bezeichnet. Zur Minimierung der notwendigen Turbinenleistung zum Antrieb einer Oxydatorpumpe und einer Brennstoffpumpe des Hauptstromtriebwerks wird der für die Vorkammer im geringeren Maße benötigte Treibstoffkomponentenanteil über eine kleine, zusätzliche Pumpenstufe der Druckpumpe geleitet, in welcher diese die für die Einspritzung in die Vorkammer notwendige Druckerhöhung erfährt.

Typischerweise wird die Vorkammer bei einem Brennraumdruck betrieben, welcher mindestens um das Turbinenentspannungsverhältnis als auch die Leitungsdruckverluste im Systembereich der Vorkammer bis zum Eintritt in die Hauptbrennkammer des Raketentriebwerks erhöht ist. Der Treibstoffkomponentenanteil, der für die Vorkammer erforderlich ist, muss dieses Druckniveau am Austritt der zusätzlichen Pumpenstufe (Kickstufe) aufweisen. Der Hauptanteil dieser Treibstoffkomponente wird jedoch in die Hauptbrennkammer des Raketentriebwerks eingeleitet und muss daher nicht dieses Druckniveau aufweisen, die der Versorgung der Vorkammer dient.

Das Vorsehen einer zusätzlichen Pumpenstufe (Kickstufe) ermöglicht zwar die Minimierung der notwendigen Turbinenleistung der Pumpe, weist jedoch aufgrund des geringen Massendurchsatzes eine vergleichsweise geringe Effizienz auf. Darüber hinaus ergibt sich die Notwendigkeit der Anordnung einer zusätzlichen drehenden Komponente und der hierfür notwendigen Zuleitung aus der Oxydatorpumpe oder der Brennstoffpumpe, je nachdem ob der Gasgenerator mager oder fett betrieben wird.

Die US 6,226,980 B1 offenbart ein Flüssigkeitsraketentriebwerk, das nach dem oben beschriebenen Prinzip des Hauptstromverfahrens arbeitet. Dieses weist eine Hauptbrennkammer und eine Turbopumpeneinheit auf, welche eine zweistufige Brennstoffpumpe (bestehend aus Haupt- und Kickpumpe) und eine einstufige Oxydartorpumpe sowie eine Vorkammer (Gasgenerator) umfasst. Die zweistufige Brennstoffpumpe und die einstufige Oxydatorpumpe werden von einer Turbine einer Turbopumpeneinheit angetrieben.

Es ist Aufgabe der vorliegenden Erfindung, eine Turbopumpe für ein Raketentriebwerk anzugeben, welches baulich und/oder funktional im Hinblick auf die Verwendung in einem Raketentriebwerk, das nach dem Hauptstromverfahren arbeitet, verbessert ist.

Diese Aufgabe wird durch eine Turbopumpe gemäß den Merkmalen des Patentanspruchs 1 gelöst. Vorteilhafte Ausgestaltungen ergeben sich aus den abhängigen Patentansprüchen.

Es wird eine Turbopumpe für ein Raketentriebwerk mit einer Radialstufe vorgeschlagen, die ein Laufrad mit Schaufeln (Schaufelblätter) in einem im Wesentlichen rotationssymmetrisch ausgebildeten Zentralkörper umfasst. Der Zentralkörper umfasst zwei getrennte Abströmbereiche für eine Treibstoffkomponente des Raketentriebwerks. Ein erster Teil der Treibstoffkomponente ist durch einen ersten der Abströmbereiche in eine Raketenbrennkammer und ein zweiter Teil der Treibstoffkomponente durch einen zweiten der Abströmbereiche in einen Gasgenerator ausförderbar. Der Gasgenerator wird auch als Vorbrenner (englisch: Preburner) bezeichnet. Der erste Abströmbereich und der zweite Abströmbereich weisen unterschiedliche geometrische Abmessungen auf, wodurch die Treibstoffkomponente in dem ersten Abströmbereich mit einem ersten Treibstoffdurchsatz und einem ersten Austrittsdruck bereitstellbar ist, die sich von einem zweiten Treibstoffdurchsatz und einem zweiten Austrittsdruck des zweiten Abströmbereichs unterscheiden.

Dadurch, dass in der Radialstufe die Funktionalität bzw. Komponenten einer Haupt-Treibstoffpumpe und einer zusätzlichen Pumpe (der sog. Kickstufe) in einer Komponente vereint sind, ergibt sich eine konstruktive Vereinfachung, eine Verringerung der Anzahl der drehenden Komponenten als auch die Möglichkeit der Effizienzsteigerung der Druckpumpe.

Das der Erfindung zugrundeliegende Prinzip besteht darin, mittels eines einzigen Laufrads die durch das Laufrad geförderte Treibstoffkomponente des Raketentriebwerks in unterschiedliche Abströmbereiche, welche einerseits mit der Raketenbrennkammer und andererseits mit dem Gasgenerator strömungstechnisch verbunden sind, zu leiten.

Gemäß einer Ausgestaltung kann das Laufrad eine in radialer Richtung außen angeordnete Teildeckscheibe umfassen, durch die die Treibstoffkomponente in den ersten und zweiten Teil aufgeteilt wird. Durch die Bereitstellung der in radialer Richtung bezüglich des Laufrads angeordneten Teildeckscheibe werden zwei voneinander getrennte Abströmbereiche erzeugt, durch die die Treibstoffkomponente mit den jeweils erforderlichen Austrittsdrücken und den jeweils erforderlichen Treibstoffdurchsätzen zu der Raketenbrennkammer und dem Gaserzeuger gefördert werden können.

Die Teildeckscheibe kann dabei als integraler Bestandteil des Laufrads an dem Laufrad vorgesehen sein. Unter einem "integralen Bestandteil" soll in dieser Beschreibung sowohl eine einstückige Ausbildung der beiden Komponenten als auch eine kraft- und/oder formschlüssige Verbindung der beiden Komponenten zu verstehen sein.

Die Teildeckscheibe legt durch ihre konstruktive Ausgestaltung und/oder die geometrische Anordnung in dem Zentralkörper die Austrittsbreiten des ersten und des zweiten Abströmbereichs fest, wodurch die Austrittsdurchmesser des ersten und des zweiten Abströmbereichs zur Bereitstellung jeweils vorgegebener Förderhöhen und/oder Austrittsdrücke in dem ersten und dem zweiten Abströmbereich festlegbar sind. Die Anordnung und die Ausgestaltung der Teildeckscheibe erfolgt dabei gemäß den Anforderungen eines jeweiligen Raketentriebwerks.

Insbesondere ist ein erster Austrittsdurchmesser des ersten Abströmbereichs, durch den die Treibstoffkomponente in die Raketenbrennkammer gefördert wird, größer als ein zweiter Austrittsdurchmesser des zweiten Abströmbereichs, durch den die Treibstoffkomponente in dem Gasgenerator förderbar ist. Die Austrittsdurchmesser werden, wie beschrieben, durch die geometrische Anordnung und Ausbildung der Teildeckscheibe festgelegt.

Es ist zweckmäßig, wenn die Schaufeln des Laufrads in dem ersten Abströmbereich kürzer als die Schaufeln des Laufrads in dem zweiten Abströmbereich sind. Über die unterschiedlichen Durchmesser der Schaufeln wird die jeweilige Förderhöhe der Treibstoffkomponenten bestimmt. Die Förderhöhe korrespondiert zum Austrittsdruck der Treibstoffkomponenten und ist von den Bedürfnissen der Raketenbrennkammer als auch des Gasgenerators abhängig. Die Schaufelhöhe am Austritt hat im Zusammenhang mit dem Austrittswinkel und dem Durchmesser der Schaufeln einen gewissen Einfluss auf die Förderhöhe. Bei dem vorgeschlagenen Radialrad wird zunächst eine Radialstufe entsprechend der Anforderungen hinsichtlich Förderhöhe für den Gasgenerator ausgelegt. Anschließend wird die Breite am Austritt auf den gewünschten Durchsatz reduziert. Entsprechend dem gegeben Schaufelwinkelverlauf, der geforderten Förderhöhe für Brennkammerversorgung als auch dem zugehörigen Durchsatz erfolgt dann die Positionierung der Abströmkante für die Brennkammerversorgung.

Die Schaufeln des Laufrads können in dem ersten Abströmbereich in Form und Anzahl in dem zweiten Abströmbereich kontinuierlich fortgeführt werden. Auf diese Weise kann das Laufrad mit geringer Komplexität bereitgestellt werden.

Es ist weiterhin zweckmäßig, wenn die Teildeckscheibe einen sich in radialer Richtung erstreckenden Abschnitt aufweist, der sich in einen jeweiligen radialen Schlitz der Schaufeln erstreckt und diese an ihrem radial äußeren Ende in einen ersten und einen zweiten Teilschaufelabschnitt unterteilt, wobei der erste Teilschaufelabschnitt im ersten Abströmbereich und der zweite Teilschaufelabschnitt im zweiten Abströmbereich verläuft. Die Teildeckscheibe und das Laufrad greifen somit ineinander (ohne sich zu berühren), was die Bereitstellung jeweils vorgegebener Förderhöhen und/oder Austrittsdrücke in dem ersten und dem zweiten Abströmbereich erleichtert.

Es ist weiterhin zweckmäßig, wenn die Teildeckscheibe im Bereich ihres äußeren Durchmessers mit einer umlaufenden Dichtung versehen ist, die an den Zentralkörper grenzt, wodurch eine räumlich Trennung der Treibstoffkomponenten in dem ersten und dem zweiten Abströmbereich gegeben ist. Dadurch findet eine verringerte wechselweise Beeinflussung der Treibstoffströme in dem ersten und dem zweiten Abströmbereich statt. Unerwünschte Auswirkungen einer solchen Wechselwirkung können dadurch teilweise vermieden werden.

Der Abströmbereich mündet in eine erste Auslaufvolute. In entsprechender Weise mündet der zweite Abströmbereich in eine zweite Auslaufvolute die im Vergleich zu der ersten Auslaufvolute kleiner ist. Auslaufvoluten sind spiralförmige Gehäuse mit beliebigem Querschnitt.

Gemäß einer weiteren Ausgestaltung ist ein Abströmbereich der Radialstufe mit einer Vorpumpe gekoppelt, durch die die Treibstoffkomponente in die Radialpumpe förderbar ist. Hierdurch kann das Kavitationsverhalten der Turbopumpe verbessert werden.

Die Erfindung wird nachfolgend näher anhand eines in den Figuren zeichnerisch dargestellten Ausführungsbeispiels beschrieben. Es zeigen:
- Fig. 1: ein vereinfachtes Flussschema eines herkömmlichen Hauptstromtriebwerkes,
- Fig. 2: einen typischen Strömungspfad bei der Verwendung einer Turbopumpe, welche eine Hauptpumpe und eine zusätzliche Pumpe (Kickstufe) für eine der Treibstoffkomponenten umfasst, in einer Schnittansicht der Turbopumpe,
- Fig. 3: eine teilweise geschnittene, perspektivische Ansicht des Aufbaus einer erfindungsgemäß ausgebildeten Radialstufe einer Turbopumpe für ein Raketentriebwerk,
- Fig. 4: eine vergrößerte Darstellung eines in Fig. 3 dargestellten Details eines Laufrads der Radialstufe,
- Fig. 5: den in einer erfindungsgemäßen Radialstufe herrschenden Strömungsverlauf in einer vergrößerten Darstellung der in Fig. 3 dargestellten Details,
- Fig. 6: eine vergrößerte Darstellung der in der erfindungsgemäßen Radialstufe vorgesehenen Abströmbereiche,
- Fig. 7: eine teilweise geschnittene, perspektivische Darstellung der erfindungsgemäßen Radialstufe, aus der die Gestalt der Schaufeln des Laufrads ersichtlich ist, und
- Fig. 8: eine vergrößerte Darstellung der teilweise geschnittenen Radialstufe zur Illustration des Verlaufs der Schaufeln und einer Teildeckscheibe der erfindungsgemäßen Radialstufe.

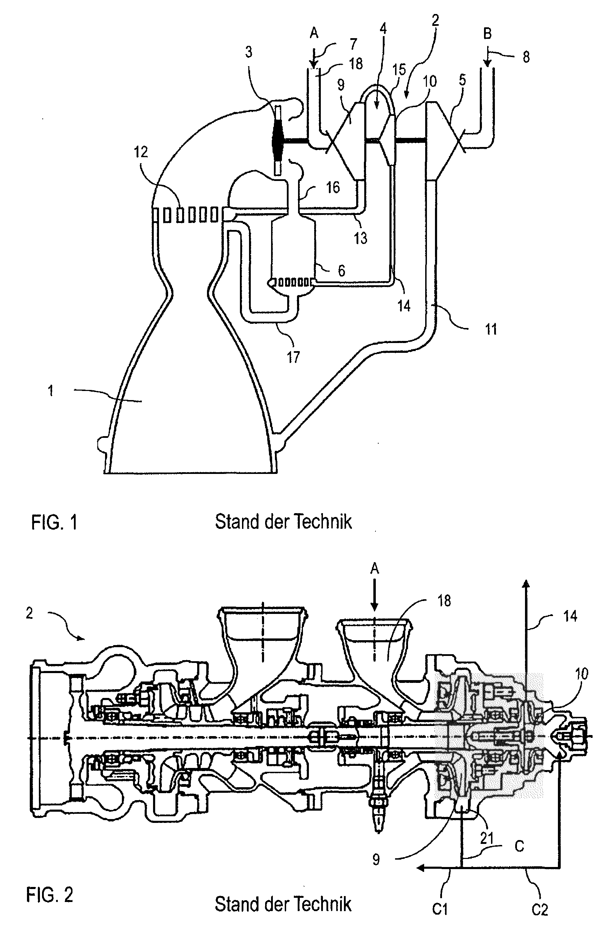

Fig. 1 zeigt eine schematische Darstellung eines Hauptstromtriebwerks, d.h. eines Raketentriebwerks, das nach dem Prinzip des bekannten Hauptstromverfahrens arbeitet. Das Raketentriebwerk umfasst eine Hauptbrennkammer 1, eine Turbopumpeneinheit 2, bestehend aus einer Turbine 3, einer zweistufigen Treibstoffkomponentenpumpe 4 und einer einstufigen Treibstoffkomponentenpumpe 5, einem Gaserzeuger (Vorbrenner, englisch: Preburner) 6 sowie den Treibstoffzuläufen 7 und 8. Das Raketentriebwerk wird mittels der Treibstoffkomponenten A, z.B. einem Oxydator, und B, beispielsweise einem Brennstoff, betrieben. Die zweistufige Treibstoffkomponentenpumpe 4 umfasst eine Hauptpumpe 9 sowie eine zusätzliche Pumpe 10, welche eine sog. Kickstufe darstellt. Die Turbine 3 dient dem Antrieb der Hauptpumpe 9, der zusätzlichen Pumpe 10 sowie der Treibstoffkomponentenpumpe 5.

Die Treibstoffkomponente B wird über den Treibstoffzulauf 8 der Treibstoffkomponentenpumpe 5 zugeführt. In der Treibstoffkomponentenpumpe 5 erfolgt eine Druckerhöhung. Die Treibstoffkomponente A wird der Hauptpumpe 9 von dem Treibstoffzulauf 7 zugeführt. Die Hauptpumpe 9 dient der Druckerhöhung der Treibstoffkomponente A für die direkte Versorgung des Mischkopfes 12 der Hauptbrennkammer 1. Der für den Betrieb des Gaserzeugers 6 benötigte Anteil der Treibstoffkomponente A, der gegenüber dem in die Hauptbrennkammer eingespeisten Massenstromanteil einen höheren Druck aufweist, durchläuft zur Druckerhöhung die zusätzliche Pumpe 10 (Kickstufe). Die Hauptpumpe 9 und die zusätzliche Pumpe 10 sind dazu über eine Leitung 15 verbunden. Die Einspeisung dieses Massenstromanteils in den Gaserzeuger 6 erfolgt über die Leitung 14.

In dem Gasgenerator 6 erfolgt eine Vorverbrennung des Überschusses der Treibstoffkomponente A, welcher über die Leitung 14 zugeführt wird, mit der Treibstoffkomponente B. Die Entspannung des Heißgases erfolgt über die Turbine 3, die die Pumpen 9, 10 und 5 antreibt. Nach dem Verlassen der Turbine 3 wird dieses Heißgas der Hauptbrennkammer 1 zwecks Nachverbrennung und Schuberzeugung zugeführt.

Der Gaserzeuger 6 wird mit einem Brennraumdruck betrieben, welcher mindestens um das Turbinenentspannungsverhältnis als auch die Leitungsdruckverluste im Systembereich des Gaserzeugers bis zum Eintritt in die Hauptbrennkammer 1 erhöht ist. Für die Leitungsdruckverluste sind gemäß der schematischen Darstellung in Fig. 1 die Leitungen 14 und 15 sowie 16 zu berücksichtigen. Dies bedeutet, der Massenstrom, der für den Gaserzeuger 6 erforderlich ist, muss dieses Druckniveau am Austritt der zusätzlichen Pumpe 10 aufweisen. Demgegenüber braucht der Hauptanteil der Treibstoffkomponente A, die über die Hauptpumpe 9 direkt in die Hauptbrennkammer 1 eingeleitet wird, dieses Druckniveau, das der Gaserzeuger-Versorgung dient, nicht aufweisen.

Fig. 2 zeigt eine schematische Darstellung einer herkömmlichen Turbopumpeneinheit 2 im Querschnitt, wobei der typische Strömungspfad bei der Verwendung einer Hauptpumpe 9 und einer zusätzlichen Pumpe 10 (Kickstufe) dargestellt ist. Die Hauptpumpe 9 und die zusätzliche Pumpe 10 bilden die zweistufige Treibstoffkomponentenpumpe für die Treibstoffkomponente A, welche über einen Zulauf 18 der Hauptpumpe 9 zugeführt wird. In der Hauptstufe 9 erfolgt die Druckerhöhung entsprechend der Anforderung der Hauptbrennkammer 1, die in Fig. 2 ebenfalls nicht dargestellt ist. Unmittelbar am Austritt aus der Hauptstufe 9 erfolgt die Aufteilung des Gesamtmassenstroms A in den Hauptmassenstrom (über die Leitung 13 in Fig. 1) C1 und den Nebenmassenstrom C2 zur Versorgung der zusätzlichen Pumpe 10, d.h. der Kickstufe. Der Massenstromanteil C2 wird der zusätzlichen Pumpe 10 zugeführt, um den Druck entsprechend den Anforderungen des Gaserzeugers 6 (Fig. 1) zusätzlich zu erhöhen. Über die Leitung 14 wird der Nebenmassenstrom C2 mit erhöhtem Druck dem Gaserzeuger 6 zugeführt.

Die zusätzliche Pumpe 10 zeichnet sich aufgrund des geringen Massendurchsatzes des Massenanteils des Nebenmassenstroms C2 durch eine nur moderate Effizienz aus. Darüber hinaus ergibt sich die Notwendigkeit der Anordnung einer zusätzlichen drehenden Komponente sowie der notwendigen Zuleitungen (Leitung 15) aus der Hauptpumpe 9.

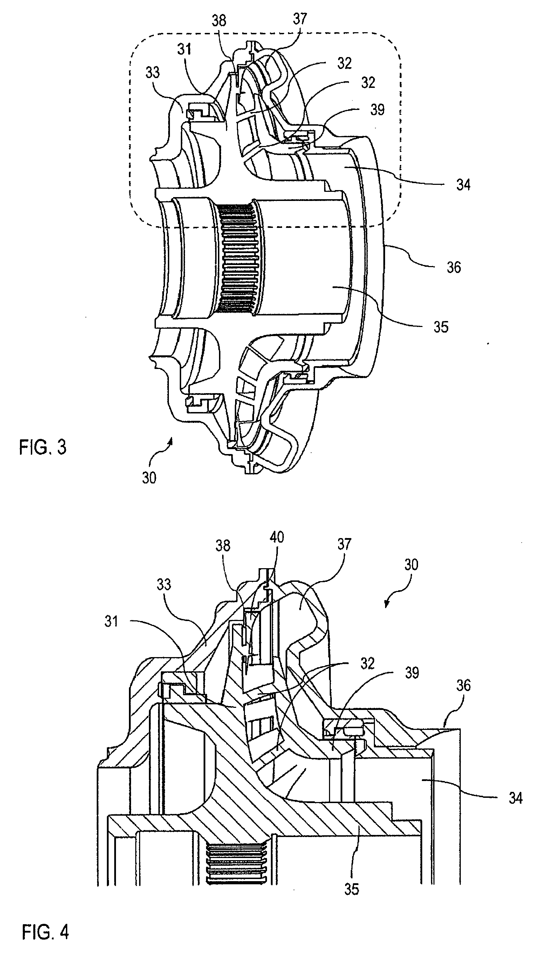

Fig. 3 zeigt eine perspektivische und geschnittene Ansicht einer erfindungsgemäßen Radialpumpe 30, die in einer Turbopumpeneinheit, wie diese in Fig. 2 dargestellt ist, die Hauptpumpe 9 und die zusätzliche Pumpe 10 ersetzt. Die Radialpumpe 30 umfasst ein Laufrad 31 mit einer Anzahl an Schaufeln 32 (auch als Schaufelblätter bezeichnet). Eine vergrößerte Darstellung der für die Erfindung wesentlichen Komponenten der Radialpumpe 30 ist in den Fig. 4 bis 6 dargestellt.

Das Laufrad 31 ist in einem im Wesentlichen rotationssymmetrisch ausgebildeten Zentralkörper 33 angeordnet. Die Treibstoffkomponente A strömt über einen ringförmigen Spalt 34, der zwischen einer Nabenkontur 35 des Laufrads 31 und einer zylinderförmigen Wandung 36 des Zentralkörpers 33 gebildet ist, in Richtung des Laufrads und wird durch die Schaufeln 32 in Richtung einer ersten und einer zweiten Auslaufvolute 37, 38 gefördert. Die Schaufeln 32 sind über eine Deckscheibe 39 miteinander verbunden. Dabei ergeben sich zwischen der Deckscheibe 39 und dem Körper des Laufrades 31 in Verbindung mit den Schaufeln bzw. Schaufelblättern 32 jeweilige Kanäle, durch die die Treibstoffkomponente A in Richtung der Auslaufvoluten 37, 38 gefördert wird. Durch die Schaufeln bzw. Schaufelblätter 32 erfolgt eine entsprechende Druckerhöhung.

Zum Austritt hin wird der Gesamtmassenstrom C der Treibstoffkomponente entsprechend den jeweiligen Anforderungen der Hauptbrennkammer und des Gaserzeugers durch eine Teildeckscheibe 40 in die Massenstromanteile C1 (Hauptmassenstrom) und C2 (Nebenmassenstrom) aufgeteilt. Die Teildeckscheibe 40 zwischen den beiden Massenstromanteilen C1 und C2 dient neben der Aufteilung in den Hauptmassenstrom C1 und den Nebenmassenstrom C2 zusätzlich der Verringerung von Überströmverlusten. Die Auslaufvoluten 37, 38 bezwecken eine Verzögerung der Geschwindigkeit der Massenstromanteile C1, C2 am Austritt aus der Radialpumpe 30 und der Weiterleitung der Massenstromanteile zu den nachfolgenden Komponenten, d.h. der Hauptbrennkammer und dem Gasgenerator. Dabei werden die Hauptbrennkammer 1 über die im Vergleich größere Auslaufvolute 37 und der Gaserzeuger 6 über die Auslaufvolute 38 versorgt.

Die Auslaufvoluten 37, 38 werden unter Berücksichtigung von z.B. konstanter Zirkulation ausgelegt und dienen hauptsächlich der Geschwindigkeitsverzögerung und Zufuhr zu den nachfolgenden Leitungen. Die Hauptabmessungen werden den jeweiligen Geschwindigkeits- und Durchsatzverhältnissen angepasst. Die jeweiligen Austrittsdrücke ergeben sich über die Geometrie der Radialpumpe. Da, wie oben beschrieben, der Druck für den Gasgenerator 6 wesentlich höher sein muss als für die Hauptbrennkammer 1 wird der Austrittsdurchmesser der Auslaufvolute 37, welche mit der Hauptbrennkammer 1 verbunden ist, größer gewählt als der Austrittsdurchmesser der Auslaufvolute 38, die mit dem Gasgenerator 6 verbunden ist.

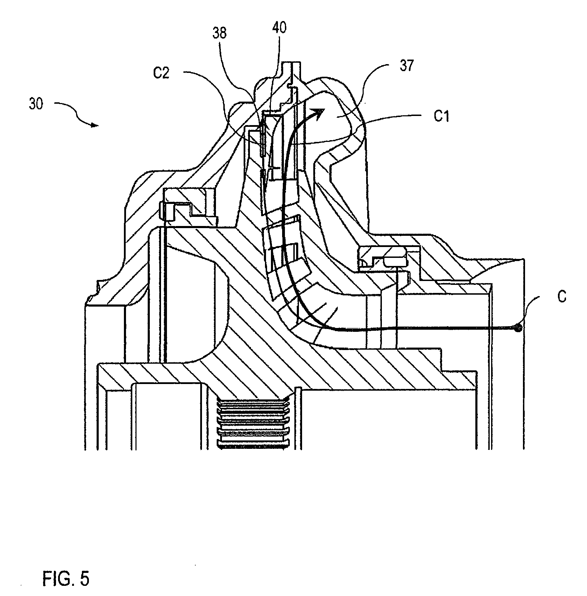

Wie insbesondere aus den vergrößerten Darstellungen der Fig. 4 und 5 ohne weiteres ersichtlich ist, wird der höhere Austrittsdruck in der Auslaufvolute 38 durch die Spaltbreite am Austritt 40 und dem Körper des Laufrades 31 als auch dem Radius bewirkt.

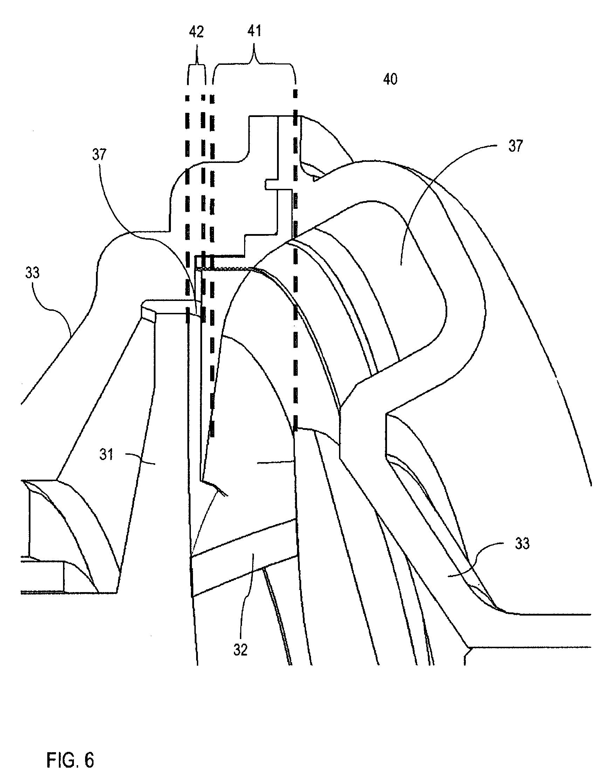

Der Gesamtmassendurchsatz C der Treibstoffkomponente A, die der Radialpumpe 30 zugeführt wird, wird unmittelbar vor dem Verlassen der Radialpumpe 30 entsprechend der Ringspaltbreiten 41, 42 (vergleiche Fig. 6) am Austritt auf die zwei Massenströme C1, C2 (vergleiche Fig. 5) aufgeteilt. Im Anschluss verlässt der Hauptmassenstrom C1 die Radialpumpe 30 über die Auslaufvolute 37. Der zur Versorgung des Gasgenerators notwendige Massenstrom C2 erfährt aufgrund des größeren Austrittsdurchmessers des Laufrades 31 die erwünschte zusätzliche Druckerhöhung.

Die Teildeckscheibe 40 ist über die Schaufeln mit dem Laufrad aufgrund der herrschenden Zentrifugalkräfte verbunden. Die Teildeckscheibe 40 ist kraft- und/oder formschlüssig mit dem Körper des Laufrades 31 verbunden. Auf ihrer radialen Außenseite ist die Teildeckscheibe 40 gegenüber dem Zentralkörper 30 mit einer Dichtung versehen, so dass sich die in die Auslaufvoluten 37, 38 strömenden Massenstromanteile der geförderten Treibstoffkomponente nicht wechselweise nachteilig beeinflussen. Die Teildeckscheibe 40 rotiert in den genannten Ausgestaltungsvarianten somit zusammen mit dem Laufrad 31.

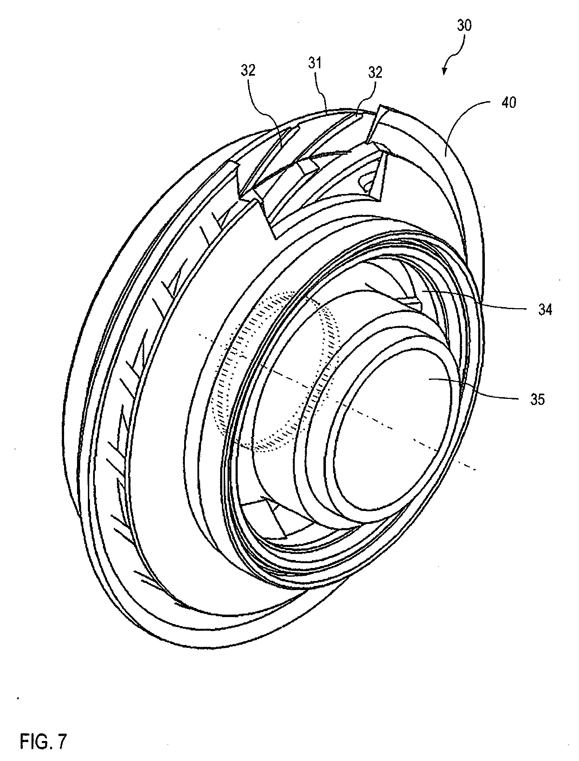

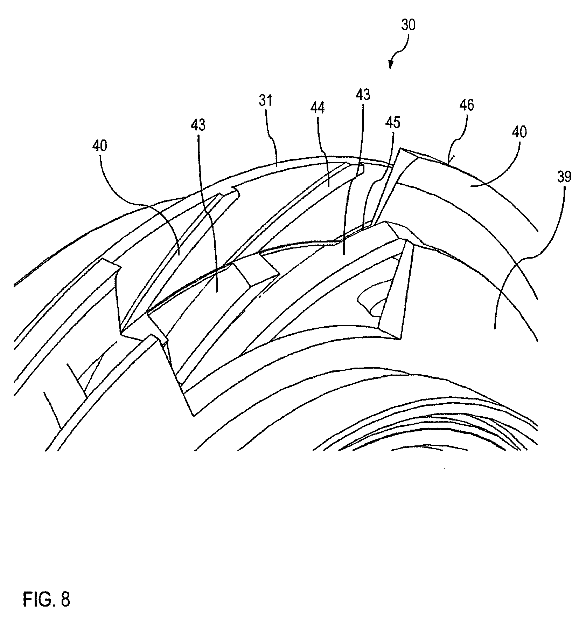

Die Fig. 7 und 8 zeigen eine mögliche Ausführungsvariante des Laufrades 31, wobei Fig. 7 eine perspektivische, teilweise geschnittene Ansicht der Radialpumpe 30 und Fig. 8 eine vergrößerte Darstellung des teilweise geschnittenen Bereichs aus Fig. 7 zeigt. Das Laufrad 31 umfasst, wie beschrieben, die Nabenkontur 35 mit den gekrümmt geformten Schaufeln 32. Die Schaufeln 32 bestehen jeweils aus einem Schaufelabschnitt 43 und einem Schaufelabschnitt 44, wobei die Schaufelabschnitte 43 im Bereich des Nebenmassenstroms C2 tangential die Teilschaufelabschnitte 43 fortführen.

Wie am besten aus Fig. 8 hervorgeht, sind die Schaufelabschnitte 43, 44 in einem radial zur Achse gerichteten Abschnitt der Teildeckscheibe 40 mit einem Spalt 45 versehen, in den die Teildeckscheibe 40 ragt. Dabei fördern die Teilschaufelabschnitte 43, welche im Vergleich zu den Teilschaufelabschnitten 44 in axialer Richtung der Radialpumpe wesentlich größer (breiter) sind, den Hauptmassenstrom C1 der Treibstoffkomponente, während die Teilschaufelabschnitte 44 den Nebenmassenstrom C2 der Treibstoffkomponente fördern. Die räumliche Trennung der Massenstromanteile C1 und C2 erfolgt, wie unschwer den Fig. 7 und 8 zu entnehmen ist, über die Teildeckscheibe 40, wobei die äußere Stirnfläche 46 der Teildeckscheibe 40 gleichzeitig zur Dichtung zum nicht dargestellten Zentralkörper 33 zwischen den zwei Teilmassenströmen C1, C2 genutzt wird.

Die vorgeschlagene Radialpumpe ist konstruktiv gegenüber einer zweistufigen Treibstoffkomponentenpumpe mit einer Hauptpumpe und einer zusätzlichen Pumpe (Kickstufe) konstruktiv wesentlich einfacher ausgebildet. Die Anzahl der sich drehenden Teile ist minimiert. Darüber hinaus kann eine Effizienzsteigerung gegenüber der herkömmlichen Anordnung in einer Turbopumpeneinheit ermöglicht werden.

### BEZUGSZEICHENLISTE

- A: Treibstoffkomponente (Oxydator)
- B: Treibstoffkomponente (Brennstoff)
- 1: Hauptbrennkammer
- 2: Turbopumpeneinheit
- 3: Turbine
- 4: zweistufige Treibstoffkomponentenpumpe für Treibstoffkomponente A
- 5: einstufige Treibstoffkomponentenpumpe für Treibstoffkomponente B
- 6: Gaserzeuger (Vorbrenner)
- 7: Treibstoffzulauf
- 8: Treibstoffzulauf
- 9: Hauptpumpe
- 10: zusätzliche Pumpe (Kickstufe)
- 11: Leitung
- 12: Leitung
- 13: Leitung
- 14: Leitung
- 15: Leitung
- 16: Leitung
- 17: Leitung
- 18: Zulauf
- 19: Leitungsstrang
- 30: Radialpumpe
- 31: Laufrad
- 32: Schaufel
- 33: Zentralkörper
- 34: Ringspalt zum Einströmen der Treibstoffkomponente in die Radialpumpe (Einlaufbereich)
- 35: Nabenkontur des Laufrads 31
- 36: zylinderförmiger Abschnitt des Zentralkörpers 33
- 37: erste Auslaufvolute
- 38: zweite Auslaufvolute
- 39: Deckscheibe
- 40: Teildeckscheibe
- 41: Ringspaltbreite für den Massenstromanteil C1
- 42: Ringspaltbreite für den Massenstromanteil C2
- 43: Teilschaufelabschnitt
- 44: Teilschaufelabschnitt
- 45: Spalt
- 46: äußere Stirnfläche der Teildeckscheibe 40
- C: Gesamtmassenstrom der Treibstoffkomponente, z.B. A
- C1: Massenstromanteil von A zur Versorgung der Hauptbrennkammer
- C2: Massenstrom von A zur Versorgung des Gasgenerators über die Kickstufe

## Patentansprüche

1. Turbopumpe für ein Raketentriebwerk mit einer Radialpumpe (30), die ein Laufrad (31) mit Schaufeln (32) in einem im Wesentlichen rotationssymmetrisch ausgebildeten Zentralkörper (33) umfasst, wobei der Zentralkörper (33) zwei getrennte Abströmbereiche (37, 38) für eine Treibstoffkomponente (A) des Raketentriebwerks umfasst, wobei ein erster Teil der Treibstoffkomponente (A) durch einen ersten der Abströmbereiche (37) in eine Raketenbrennkammer und ein zweiter Teil der Treibstoffkomponente (A) durch einen zweiten der Abströmbereiche (38) in einen Gaserzeuger (6) ausförderbar ist, wobei der erste Abströmbereich (37) und der zweite Abströmbereich (38) unterschiedliche geometrische Abmessungen aufweisen, wodurch die Treibstoffkomponente (A) in dem ersten Abströmbereich (37) mit einem ersten Treibstoffdurchsatz und einem ersten Austrittsdruck bereitstellbar ist, die sich von einem zweiten Treibstoffdurchsatz und einem zweiten Austrittsdruck des zweiten Abströmbereichs (38) unterscheiden.

2. Turbopumpe nach Anspruch 1, bei der das Laufrad (31) eine in radialer Richtung außen angeordnete Teildeckscheibe (40) umfasst, durch die die Treibstoffkomponente (A) in den ersten und den zweiten Teil aufgeteilt wird.

3. Turbopumpe nach einem der vorhergehenden Ansprüche, bei der die Teildeckscheibe (40) durch ihre konstruktive Ausgestaltung und/oder geometrische Anordnung in dem Zentralkörper (33) die Austrittsbreiten des ersten und des zweiten Abströmbereichs (37, 38) festlegt, wodurch die Austrittsdurchmesser (41, 42) des ersten und des zweiten Abströmbereichs (37, 38) zur Bereitstellung jeweils vorgegebener Förderhöhen und/oder Austrittsdrücke in dem ersten und dem zweiten Abströmbereich (37, 38) festlegbar sind.

4. Turbopumpe nach Anspruch 3, bei der ein erster Austrittsdurchmesser (41) des ersten Abströmbereichs (37) größer als ein zweiter Austrittsdurchmesser (42) des zweiten Abströmbereichs (38) ist.

5. Turbopumpe nach einem der vorhergehenden Ansprüche, bei der die Schaufeln (32) des Laufrads (31) in dem ersten Abströmbereich (37) kürzer als die Schaufeln (32) des Laufrads (31) im zweiten Abströmbereich (38) sind.

6. Turbopumpe nach einem der vorhergehenden Ansprüche, bei der die Schaufeln (32) des Laufrads (31) in dem ersten Abströmbereich (37) in Form und Anzahl in den zweiten Abströmbereich (38) kontinuierlich fortgeführt sind.

7. Turbopumpe nach einem der Ansprüche 2 bis 5, bei der die Teildeckscheibe (40) einen sich in radialer Richtung erstreckenden Abschnitt aufweist, der sich in einen jeweiligen radialen Schlitz der Schaufeln (32) erstreckt und diese an ihrem radial äußeren Ende in einen ersten und einen zweiten Teilschaufelabschnitt (43, 44) unterteilt, wobei der erste Teilschaufelabschnitt (43) im ersten Abströmbereich (37) und der zweite Teilschaufelabschnitt (44) im zweiten Abströmbereich (38) verläuft.

8. Turbopumpe nach einem der vorhergehenden Ansprüche, bei der die Teildeckscheibe (40) im Bereich ihres äußeren Durchmessers mit einer umlaufenden Dichtung versehen ist, die an den Zentralkörper (33) grenzt, wodurch eine räumliche Trennung der Treibstoffkomponenten (A) in dem ersten und dem zweiten Abströmbereich gegeben ist.

9. Turbopumpe nach einem der vorhergehenden Ansprüche, bei der der erste Abströmbereich (37) in eine erste Auslaufvolute (37) mit einem ersten Durchmesser mündet.

10. Turbopumpe nach einem der vorhergehenden Ansprüche, bei der der zweite Abströmbereich (38) in eine zweite Auslaufvolute (38) mit einem zweiten Durchmesser mündet, der im Vergleich zu dem ersten Durchmesser der ersten Auslaufvolute (37) kleiner ist.

11. Turbopumpe nach einem der vorhergehenden Ansprüche, bei der ein Einströmbereich der Radialpumpe (30) mit einer Vorpumpe gekoppelt ist, durch die die Treibstoffkomponente (A) in die Radialpumpe (30) förderbar ist.
